Europäisches Patentamt

European Patent Office

Office européen des brevets

(19)

(11) **EP 0 771 759 B1**

(12) **EUROPEAN PATENT SPECIFICATION**

(45) Date of publication and mention
of the grant of the patent:
**24.04.2002 Bulletin 2002/17**

(51) Int Cl.[7]: **C01B 13/02**, C25B 1/02,
C25B 9/00, B01D 53/32

(21) Application number: **96906780.0**

(22) Date of filing: **28.03.1996**

(86) International application number:
**PCT/ES96/00068**

(87) International publication number:
**WO 96/30297 (03.10.1996 Gazette 1996/44)**

(54) **PROCESS FOR THE ELECTROLYTIC SEPARATION OF OXYGEN FROM ITS MIXTURES AND EQUIPMENT FOR IMPLEMENTING SUCH PROCESS**

VERFAHREN ZUR ELEKTROLYTISCHEN ABTRENNUNG VON SAUERSTOFF AUS SAUERSTOFF ENTHALTENDEN MISCHUNGEN UND VORRICHTUNG DAFÜR

PROCEDE DE SEPARATION ELECTROLYTIQUE D'OXYGENE DE MELANGES CONTENANT DE L'OXYGENE ET APPAREIL DE MISE EN OEUVRE DE CE PROCEDE

(84) Designated Contracting States:
**AT BE CH DE DK ES FI FR GB GR IE IT LI LU MC NL PT SE**

(30) Priority: **31.03.1995 ES 9500064**

(43) Date of publication of application:
**07.05.1997 Bulletin 1997/19**

(73) Proprietor: **SOCIEDAD ESPANOLA DE CARBUROS METALICOS S.A.**
**08038 Barcelona (ES)**

(72) Inventors:
• **CASADO GIMENEZ, Juan**
**E-08038 Barcelona (ES)**
• **BRILLAS COSO, Enrique**
**E-08028 Barcelona (ES)**

(74) Representative: **Ponti Sales, Adelaida et al**
**Oficina Ponti**
**Consell de Cent 32233**
**08007 Barcelona (ES)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 771 759 B1

**Description**

The present invention relates to an electrochemical process for separation and purification of oxygen from gas mixtures containing it (e.g. air) in an aqueous medium as set out in appended claim 1. The invention also relates to the equipment used to perform this process as set out in appended claim 12.

BACKGROUND OF THE INVENTION

The present invention is restricted to the use of aqueous electrolytes, and therefore references to organic electrolytes (e.g. dimethylsulphoxide + tetraalkylammonium tetrafluoroborate) or to solid ionic conductors (e.g. yttrium oxide-stabilized zirconium oxide) which have also been used for the obtention or purification of oxygen are not included herein.

Thus, for instance, processes for concentrating oxygen from a feed gas containing it by using solid electrolytes that comprise ion-exchange resins are well known and have been described, e.g. in US Patent US-5,338,412. However, such processes do not allow the obtention of pure oxygen since the electrolyte used exhibits permeability not only to oxygen gas but also to other gases such as nitrogen gas. This permits only to concentrate oxygen but not the obtention of pure oxygen from a gas mixture containing it. On the other hand, systems employed for said concentration of oxygen comprise two electrodes spaced apart by a solid polymer with an ion-exchange resin, so that when the conductivity of said polymer decreases, the whole system must be replaced due to the fact that the polymer and the electrodes form a single compact unit, thereby involving an additional cost to the system.

Likewise, systems for separating oxygen based in Fe- or Co- organometallic complexes, which may act as carriers to facilitate the transport of said gas in a similar manner as haemoglobin does in blood, are also explicitly excluded from this invention. When referring to the prior art we have limited ourselves to those publications closer to the subject invention.

In recent years, many papers relative to cathodic reduction of oxygen on graphite and gas-diffusion electrodes in different aqueous media have been published. Gas-diffusion electrodes are essentially constituted of carbon powders (carbon black) mixed with polytetrafluoroethylene (PTFE) as a binder, which are hot-pressed on a support (normally a metal mesh) that also acts as a current distributor. Under these conditions, the electroreduction process of oxygen is bielectronic and leads to formation of either hydrogen peroxide at pH<11,6 or its conjugated base, hydroperoxide ion, at pH>11,6. The reactions taking place in this process are the following [Yeager E., Electrochim. Acta, 29, 1572 (1984):

$$pH<5 \qquad O_2 + 2\,H^+ + 2\,e^- \rightarrow H_2O_2 \qquad\qquad (1a)$$

$$5<pH<11.6 \qquad O_2 + 2\,H_2O + 2\,e^- \rightarrow H_2O_2 + 2\,OH^- \qquad\qquad (1b)$$

$$pH>11.6 \qquad O_2 + H_2O + 2\,e^- \rightarrow HO_2^- + OH^- \qquad\qquad (1c)$$

The first electrochemical synthesis of hydrogen peroxide by reduction of oxygen is due to Traube and dates back to 1882. This reaction has been studied in acidic and basic media, and even in pure water with a proton-exchange membrane of Nafion® 117 as the electrolyte [Tatapudi P. and J.M. Fenton, J. Electrochem. Soc., 140, L55 (1993). The best current-efficiencies for generation of $H_2O_2$ have been obtained in a basic medium. Thus, Mathur, James and Bisset [European Patent No. 248433 (1987); US Patent No. 4,927,509 (1990)] have used a bipolar cell with a permeable diaphragm Celgard® , an oxygen-fed graphite-carbon-PTFE cathode and a Ni anode with an electrocatalytic amount of Co- and W-compounds to produce $HO_2^-$ (30.5 g/l) in a NaOH-containing aqueous solution (38.5 g/l). The current-efficiency was 92.2% for a current-density (j) of 0.3 A/square inch and a voltage (V) of 1.78 V. Moreover, Do and Chen [J. Electrochem. Soc., 140, 1632 (1993)] have studied the effect of pH and temperature on electrogeneration of $H_2O_2$ in the cathodic compartment of a H-type cell by using $O_2$-fed graphite as a cathode, and a Pt wire as an anode. These authors have found an efficiency of 88.4% upon circulation of a current-density of 50 mA $cm^{-2}$ at pH = 13 and 25°C, and they consider that the loss of electrogenerated hydroperoxide-ions is due to the following decomposition reaction in a basic medium:

$$2\,HO_2^- \rightarrow O_2 + 2\,OH^- \qquad\qquad (2)$$

The most common method for electrochemically obtaining oxygen is the electrolysis of water. The theoretical voltage for the electrolytic decomposition of water into $H_2$ and $O_2$ is 1.23 V at 25°C, but the high overvoltage at the anode causes an increase of the cell voltage up to a value of 2.2 V in 5 M KOH at $j$ = 100 mA cm$^{-2}$. This means an energetic efficiency of only 0.135 kg $O_2$/kwh. Besides, hydrogen formation at the cathode entails a potential risk in areas where portable $O_2$-generators are used. In order to achieve lower V-levels, better yields, and that only pure oxygen gas be evolved from the cell, various systems have been designed capable of cathodically reducing air oxygen via 4 electrons to give rise to hydroxy ions according to the following reaction:

$$O_2 \text{ (from air)} + 2\,H_2O + 4\,e^- \rightarrow 4\,OH^- \qquad (3)$$

and simultaneously of anodically oxidizing hydroxy ions to release the same amount of pure oxygen through the opposite reaction:

$$4\,OH^- \rightarrow O_2\,(\text{ pure }) + 2\,H_2O + 4\,e^- \qquad (4)$$

One of these systems is an electrochemical oxygen-separator with a 100 cm$^2$ Nafion® ion-exchange membrane as the electrolyte [Fujita Y., H. Nakamura and T. Muto, J. Appl. Electrochem., 16 (1986) 935-490].

The cathode was a graphite-powder hot-pressed on Nafion with 10% Pt and 60% PTFE, whilst its other face was coated with Pt to form the anode. By feeding the cathode with an air-flux of 4 l min$^{-1}$, a $j$ = 100 mA cm$^{-2}$ with a voltage in this cell of 1.25 V at 40°C has been achieved. When the device was operated at 200 mA cm$^{-2}$ it produced 70.9 ml min$^{-1}$ oxygen having a purity of 98.4%. Another more efficient system for the tetraelectronic process has been designed by Tseung A.C.C. and S.M. Jasem [J. Appl. Electrochem., 11, 209 (1981)]. It consists of a H-type cell with carbon-black electrodes spaced apart by a glass-fibre membrane and containing 5 M KOH. In the cathodic compartment, the electrode floats on the KOH solution and is fed with air. These authors achieved voltages of 1.3 V at 25°C and of 1.0 V at 40°C for a $j$ value of 100 mA cm$^{-2}$, whereby a yield of oxygen of 0.298 kg $O_2$ kwh$^{-1}$ at 40° was experimentally determined, just the same as the one predicted by theory.

Tseung and Jasem have also described an electrochemical-chemical method intended for the extraction of $O_2$ from air in 5 M KOH, by using a three-chamber cell [US Patent No. 4,300,987, November 17, 1981]. In the cathodic chamber there is a graphite-PTFE cathode which floats on the solution and, when fed with air, reduces oxygen to $HO_2^-$ according to equation (1c). By placing a Ni mesh coated with $NiCO_2O_4$ in the intermediate chamber, the electrogenerated $HO_2^-$ chemically decomposes to $O_2$ according to reaction (2), whereas in the anodic chamber evolution of 02 occurs (reaction (4) on a $NiCO_2O_4$-PTFE anode. Thus, one achieves that the same amount of oxygen bielectronically reduced in the cathode be recovered in the decomposition chamber plus the anodic chamber. With this system, said inventors have been able to obtain yields of 0.378 and 0.486 kg $O_2$ kwh$^{-1}$ at 25°C and 40°C, respectively, with voltages (once deducted the ohmic drop) of 1.34 V and 1.40 V at a $j$ = 100 mA cm$^{-2}$.

In all the preceding studies relative to electrochemical separation of oxygen from air in a basic medium, operation has been carried out in the absence of $HO_2^-$ in the neighbourhood of the anode, without taking into account its possible anodic oxidation to generate $O_2$.

DESCRIPTION OF THE INVENTION

The present invention comprises a new method capable of separating oxygen from a gas mixture containing it by means of an electrochemical process in which takes part 2 electrons per molecule of purified oxygen. Although the system may be applied to a plurality of oxygen-containing gas mixtures to obtain both pure oxygen or totally or partially deoxygenated gas mixtures, it has been designed thinking in the separation and purification of air oxygen, so that from now on "air" will be referred to as a generic example of any gaseous mixtures to which the present invention may be applied.

The process of the invention for the electrolytic separation of oxygen from its mixtures comprises the steps of:

a) bringing an oxygen-containing gas in contact with a gas-diffusion cathode containing no catalyst for hydrogen peroxide decomposition,

b) supplying an electric potential difference between the cathode and an anode, so that

b.1- oxygen is converted into hydrogen peroxide or its conjugated base at the cathode according to a bielectronic process,

b.2 - hydrogen peroxide or its conjugated base is diffused through an aqueous electrolyte from the gas-diffusion cathode to the anode, and

b.3.- diffused hydrogen peroxide or its conjugated base is converted into pure oxygen at the anode according to a bielectronic process.

Both electrodic processes have the feature to be bielectronic, which involves an electrical consumption per kilogram of oxygen lower than in other electrochemical processes.

The operation of this cell is based upon electrogeneration of $HO_2^-$ by cathodic reduction of air-oxygen according to reaction (1c) and its further anodic decomposition generating pure $O_2$ via 2 electrons:

$$HO_2^- + OH^- \rightarrow O_2 \text{ (pure)} + H_2O + 2 e^- \tag{5}$$

The same amount of oxygen reduced at the cathode is released at the anode, i.e, the separation/purification $O_2$ (air) $\rightarrow O_2$ proceeds through a bielectronic overall process.

The absence of a catalyst for decomposition of hydrogen peroxide at the gas-diffusion cathode prevents the tetraelectronic reaction from $O_2$ to $H_2O$.

The pH of the electrolyte is normally high. Nevertheless, we have realized that the generation of hydrogen peroxide may be performed with a good yield from pH 2.5 upwards, whereby the scope of this invention includes any electrolytes having a pH equal to or higher than 2.5, although a pH higher than 11 is preferred in order to avoid corrosion problems and to allow using an alkali as a background-electrolyte (Li-, Na-, K- ... hydroxides) due to its high conductivity at moderate concentrations. Suitable concentrations range from 0.1 M to 10 M, although values between 0.5 and 6 M are preferred. Under such circumstances, the cathodic (1c) and anodic (5) reactions are exactly opposite, as seen before.

Whilst in the process no negative incidence by the air employed has been observed, it is obvious that it will be advantageous to filtrate and purify said inlet-gas in the usual manner like in other obtention processes starting from atmospheric oxygen. Particularly, carbon dioxide and certain acidic pollutants present in the air entail a danger to an alkaline electrolyte because they may, for instance, degrade it by carbonation.

Fortunately, a solution of the alkali itself may efficiently act as a gas washer by previously removing such undesired components. In practice, this means a new usefulness for the used electrolyte which may be in this way reused until its pH is lowered down to 10, its further treatment as waste water being easier and less expensive. Anyhow, provided that suitable precautions are taken there is no reason to suppose that the same electrolyte could not be used indefinitely. Consequently, the process is a safe and environmentally acceptable one.

The air pressure on the cathode in not significantly higher than one atmosphere. Nevertheless, a higher partial pressure of the inlet-oxygen is of benefit to the process which may be performed with inlet-gas pressures ranging from the atmospheric pressure to $1 \times 10^7$ Pa, preferably from $1 \times 10^5$ to $1 \times 10^6$ Pa. For the same reason, it is beneficial to suck the outlet-oxygen. Oxygen produced at the anode may be recovered or sucked at a pressure ranging from the atmospheric one to $1 \times 10^3$ Pa, preferably from $1 \times 10^5$ to $1 \times 10^4$ Pa. The only significant impurity in said oxygen is moisture, which may be removed by means of conventional condensation or drying equipments.

Since hydrogen peroxide is generated in the cathode, transported towards the anode an oxidized therein, it will be obvious to anyone skilled in the art that in the solution a steady concentration is finally reached which will not vary unless some parameters such as current-density, electrolyte concentration or temperature are modified. However, achievement of this stationary state may be very slow and hence it will be advantageous to initially add such an amount of $H_2O_2$ that its concentration remains constant during the process. In this way, the steady state may be reached immediately.

Commercial $H_2O_2$ solutions are known to contain, normally, small concentrations of stabilizers such as urea, diphosphates, tin compounds, acetanilide, alcohol, etc. Generally they are sequestering agents able to catch the small amounts of transition metals, e.g. iron, that catalyze decomposition of hydrogen peroxide. It has been ascertained that addition of some of these compounds allows to increase the yield of the process.

It has been proved that the process operates better at temperatures above room temperature, such as it is the case in many other electrolytic processes. The device may operate between 0 and 100 °C. In those systems running under pressure it is possible to operate at temperatures above 100°C. Nevertheless, when oxygen evolves through the electrolyte, and in order to obtain it in a not excessively wet condition, it is preferable to use moderate temperatures, between 20 and 50 °C.

The designed system consists of a single-compartment cell containing a cathode of carbon which is agglomerated by means of a hydrophobic polymer, e.g. PTFE, polyethylene or polyvinyl chloride (PVC), with no other catalyst (addition of Pt or a metal-oxide such as perowskyte produces the tetraelectronic reaction of $O_2$ to $H_2O$ that is intended to be avoided), feeding with air, an anode stable under the process conditions, and an alkali solution.

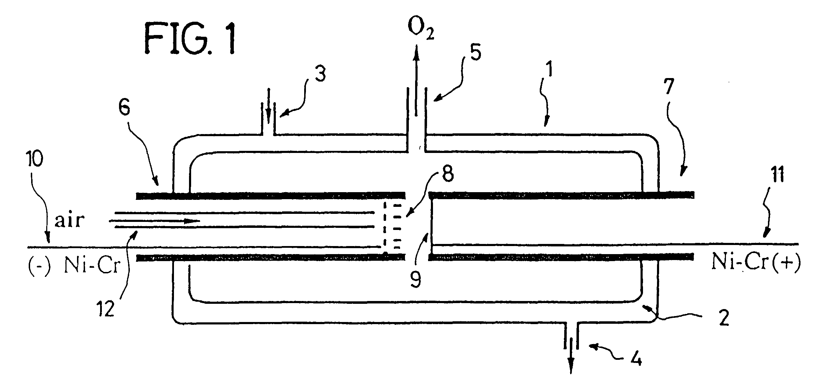

Fig. 1 relates to the invention's equipment which will be next described. It comprises a Ni-CT thermostatted cell used for the electrolytic separation of oxygen from air. Said equipment is only one among all possible within the scope of this invention and it has been chosen because it is the one used in the experiments provided as examples.

The electrolytic cell consisted of a cylindrical glass tube 1 with an external thermostatization jacket 2, with an inlet 3 and an outlet 4 of water directed to the thermostat, and an upper outlet tube 5 for collecting oxygen gas and for sampling. Through each tube-end, electrodic supports 6 and 7 are introduced which are fitted with bakelite threads. Each support was a polypropylene hollow-cylinder and in its internal end was placed the corresponding electrode, cathode 8 and anode 9, which were connected to a conventional continuous-power supply through conduction wires 10 and 11.

The anode may be of any conducting material, stable and capable of oxidizing hydrogen peroxide to oxygen, e.g., metals, alloys, conducting metal-oxides, graphite or carbon-PTFE. In the design shown in Fig, 1, the anode was a Ni sheet, but carbon-PTFE anodes have also been used with good results. Anodes containing a catalyst for decomposition of $H_2O_2$ such as Pt, perowskytes or certain compounds of transition metals such as e.g. Fe (III) or Ni (II), have been also used.

The CT cathode was a mixture of carbon-PTFE, with no other catalyst, hot-pressed on a Ni mesh. The active carbon-PTFE surface is in contact with the solution, whereas the Ni mesh acts as a distributor of the electric current and is in contact with the Ni-Cr connection wire. For preparing the carbon-PTFE, 75% carbon black and a 25% PFTE dispersion were mixed. The resulting mixture was dried at $240°C$ and crushed with a mill. Following hot-pressing the cathodes used herein had a thickness of about 0.4 mm. While electrodes of up to 5 mm in thickness may be used, thicknesses of 0.1 mm and 0.5 mm are preferred for an easier diffusion of oxygen therethrough.

The Ni anode and the CT cathode were fitted to their corresponding supports by means of polypropylene threads with a cylindrical central opening. The surface area of each electrode in contact with the KOH solution was of 0.785 cm$^2$.

The air necessary to feed the carbon-PTFE cathode (CT) was supplied by a low-power compressor which produced a 140 ml min$^{-1}$ flux through a glass tube 12 within the cathodic support, the remaining gas being discharged to the atmosphere. Consequently, in this configuration the air pressure on the cathode was not significantly greater than one atmosphere.

The cell used herein included no device for stirring the electrolyte, since this is not necessary for its performance. Nevertheless, evidence has been found of control by diffusion in the anodic oxidation of hydrogen peroxide at low concentrations, for which reason any device for stirring or recycling the electrolyte should be of benefit for the process.

In another design containing a recycling device, a porous anode (e.g. grid, mesh or metallic gauze, or a sintered material) should be used through which the passage of electrolyte would be forced in opposite direction to the cathode. This flux would have the further advantage of drawing out the oxygen bubbles formed and allowing a closer approach between electrodes.

Nevertheless, a porous anode may also be advantageously used without recycling if it is placed horizontally over, and close to, the cathode. In this case, the gravity itself provides for drawing the gas bubbles out of the interelectrodic area where interferences, short-circuits, conductivity decreases and/or undesired side reactions could occur. Such harmful effects were observed in the cell of Fig. 1 when the distance between electrodes was lower than 5 mm and for this reason such distance has been the one used in most experiments. However, this distance, which may range from 0.1 to 10 mm, should be conveniently reduced whenever the design allows it, operating between 0.1 and 1 mm being preferred. The nearness between electrodes allows to operate whit lower alkali concentrations which, in turn, are compatible with higher $HO_2^-$ concentrations that improve the yield of the process and reduce the voltage of the cell.

Another useful accessory for the present device is a thin permeable membrane or diaphragm between the electrodes (e.g. of paper, cloth, asbestos, glass or a plastic lattice) whose function is to separate them in order to prevent short-circuits while maintaining them close to each other for minimizing transport difficulties of the species in solution as well as losses by ohmic drop. A suitable design for this device should permit using it as a turbulence-promoter with the same purpose.

In a cell like the one used, $HO_2^-$ is electrogenerated from the reduction of air $O_2$ according to reaction (1c). When operating at sufficiently low voltages, preferably from 0.1 to 1 V, reduction of $H_2O$ (energetically less favourable) does not occur; at the cathode only $HO_2^-$ is generated and the overall process in the cell will be bielectronic. However, oxidation of $OH^-$ ion according to reaction (4) and of $HO_2^-$ ion according to reaction (5) may simultaneously occur at the anode. In the absence of $HO_2^-$ only the OH- discharge will occur and n will be 4, whereas when $HO_2^-$ electrodecom-

poses n will vary from 2 to 4. The object of the device presented is to reach a steady state operation which produces oxygen at potentials lower than 1 V and with a consumption of 2 electrons per molecule of purified oxygen. From voltage values of 0.2 V upwards some current-density has been observed and hence oxygen starts to be generated.

The exhaust gas arising from cathode is an oxygen-impoverished or oxygen-devoid air which may be applied, for instance, in inerting processes. The mixture of part of this gas with pure oxygen arising from anode allows to obtain oxygen-enriched mixtures at any concentration between 21 and 100%. These mixtures find, among others, possible uses in hospitals and may promote combustions and oxidations which otherwise should be difficult in ordinary air. They are also employed in the smelting of certain metals.

The present invention provides improvements over prior works. The experimental tests performed have allowed to improve the results obtained with previous devices. Particularly, voltages to be applied for obtaining a determined pure oxygen flux have been reduced, and the energetic efficiency of the process has been markedly increased, as shown in the following examples. In order to increase the oxygen fluxes being produced, besides the usual stepping in industrial processes it is also possible to interconnect a sufficient number of individual cells.

The energetic efficiency (r) of oxygen in terms of kg $O_2$ per kwh consumed may be easily calculated, and it only depends upon the number of electrons consumed per molecule of oxygen evolved (n) and the potential-difference applied. In case of n = 4, i.e. if only the $OH^-$ ion would be oxidized at the anode according to reaction (4) and all the $HO_2^-$ would accumulate in the cell medium, the yield would be:

$$(6) \qquad r = 0.298/V$$

where V is the potential in volts. This equation may be applied to conventional oxygen-extraction cells. Contrarily, if all the $HO_2^-$ is oxidized at the anode, as indicated by reaction (5) and n = 2, the yield of oxygen in the cell is:

$$(7) \qquad r = 0.596/V.$$

When comparing equations (6) and (7), it is evident that a bielectronic cell possesses twice the energetic yield of oxygen than a conventional tetraelectronic cell for the same value of V, although they operate at a different current-density. On the other hand, the number of electrons, n, may be easily determined by the Faraday's law from the electrical charge consumed and the volume of oxygen evolved from the anode.

EXAMPLES

Example 1

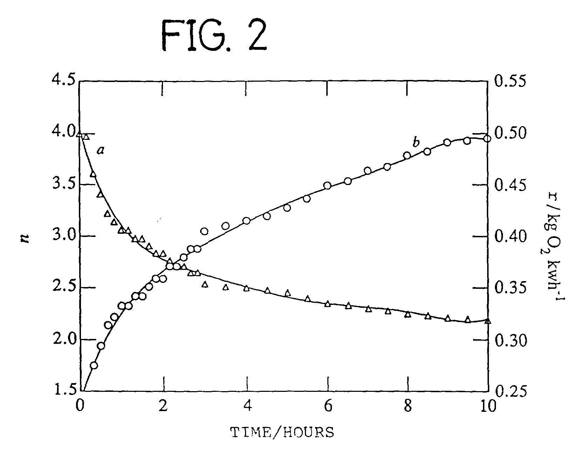

In the cell of Fig. 1, 50 ml of a 2.4 M KOH solution was electrolyzed at a constant current-density of 100 mA $cm^{-2}$ for 10 hours while determining the volume of oxygen gas evolved, the change in $HO_2^-$ and $OH^-$ concentrations, as well as the potential-difference between electrodes. The interelectrodic distance was 5 mm and the temperature 25°C. Fig. 2 represents in the Y-axis on the right of the figure the values for the yield r expressed as kg $O_2$ $kwh^{-1}$ (curve b) and in the Y-axis on the left of the figure the values for the number of electrons n per mole of oxygen evolved (curve a), and in abscissae the time elapsed expressed in hours. In this Figure, it may be observed that the number of electrons per mole of oxygen evolved from the cell gradually decreases from n = 4 (initial time) to n = 2.17 after 10 hours electrolysis. This result indicates an increase of the electrodeposition rate of $HO_2^-$ as its concentration in the medium grows. Moreover, it may also be observed that voltage also decreases from an initial value of 1.21 V to a final value of 1.10 V. This fact, together with the decrease of n, causes a gradual increase of r from 0.247 to 0.495 kg $O_2$ $kwh^{-1}$ during the electrolysis time. The final $HO_2^-$ concentration was 0.15 M, in agreement with the observed decrease for $OH^-$ concentration.

Example 2

In the same cell as in Example 1, 50 ml of a solution of 2,4 M KOH and 0,18 M $HO_2^-$ was electrolyzed at constant current-densities of 38, 100 and 191 mA $cm^{-2}$ for 9 hours, the volume of oxygen gas evolved, the change in $HO_2^-$ and $OH^-$ concentrations, as well as the variation in voltage, being all determined. The interelectrodic distance was 5 mm and the temperature 25°C. At 38 mA $cm^{-2}$ voltage remained unchanged between 0.68 V and 0.72 V, at 100 mA $cm^{-2}$ between 1.02 V and 1.05 V, whereas at 192 mA $cm^{-2}$ it gradually diminished from 1.61 V to 1.46 V after 9 hours electrolysis. The volume of oxygen evolved was in very good agreement with the one predicted by theory assuming n = 2 for j = 38 and 100 mA $cm^{-2}$, conditions under which the composition of the medium scarcely varied during electrolysis. However, the agreement is not good for j = 191 mA cm$^{-2}$. In this case, the value of n gradually decreased along with electrolysis time from 2.38 to 2.05, whereas 4.5 millimole of HO$^-_2$ were built-up in the medium, which proves that at this current-density the steady state corresponds to a peroxide concentration higher than 0.2 M.

Example 3

Similar experiments to those of Example 2 were carried out with different electrolyte compositions and at different temperatures, by applying constant current-densities of 38 and 100 mA cm$^{-2}$ for periods from 1 to 3 hours. In Table 1, cell-voltages, mean values of n as determined from the volume of oxygen obtained every 10 minutes of electrolysis, and energetic efficiencies of oxygen obtained for n = 2 (as experimentally determined) are summarized.

Table 1.

| Values for n, and yield of oxygen (r) as determined for different Ni-CT cells operating at an almost-steady state, at a constant current-density | | | | | | |
|---|---|---|---|---|---|---|
| [KOH]/M | [H0$^-_2$]/M | Temp./°C | j/mA cm$^{-2}$ | Voltage/V | n | r |
| 0.8 | 0.121 | 25 | 38 | 0.89 | 1.99 | 0.671 |
| | 0.216 | 25 | 38 | 0.57 | 2.01 | 1.047 |
| | 0.381 | 25 | 38 | 0.52 | 1.96 | 1.148 |
| | | 25 | 100 | 1.02 | 2.05 | 0.585 |
| | | 35 | 100 | 0.90 | 2.00 | 0.663 |
| | | 45 | 100 | 0.86 | 1.95 | 0.694 |
| 2.4 | 0.124 | 25 | 38 | 0.76 | 1.97 | 0.786 |
| | 0.185 | 25 | 38 | 0.68 | 1.99 | 0.878 |
| | | 25 | 100 | 1.02 | 2.00 | 0.585 |
| | | 35 | 100 | 0.90 | 1.97 | 0.663 |
| | | 45 | 100 | 0.82 | 1.97 | 0.728 |
| | 0.266 | 25 | 100 | 0.98 | 2.03 | 0.609 |
| | | 35 | 100 | 0.85 | 1.96 | 0.702 |
| | | 45 | 100 | 0.77 | 1.98 | 0.775 |
| | 0.459[a] | 25 | 100 | 0.73 | 1.98 | 0.816 |

[a] The electrolyte contained urea at a concentration of 1.5 mM.

As it may be seen in Table 1, at constant current-density and temperature the yield of oxygen noticeably increases with HO$^-_2$ concentration. Upon increasing temperature, a decrease of cell voltage occurs, and the yield of oxygen also increases.

The Ni-CT cell may operate at current-densities of 100 mA cm$^{-2}$ by applying voltages of 0.98 V at 25°C to give an oxygen yield of 0.609 kg O$_2$ kwh$^{-1}$. This value is significantly higher than the yields of 0.378 an 0.486 kg O$_2$ kwh$^{-1}$ at 100 mA cm$^{-2}$ obtained by Tseung and Jasem at 25°C and 40°C, respectively, which are the best values found in the literature for the electrolytic obtention of oxygen. Our best yield at 100 mM cm$^{-2}$ has been 0.815 kg O$_2$ kwh$^{-1}$ at 45°C. In this test a small amount of urea was added to the solution. At lower current-densities, yields higher than 1 kg O$_2$/kwh may easily be obtained, even at room temperature.

Example 4

In this case, the same cell as in the preceding Examples was used, but fitted with a CT instead of a Ni anode. For comparative purposes, a CT-CT cell under the same conditions than the Ni-CT cell, at 25°C and 5 mm interelectrodic distance, has been studied. The almost stationary j-V curve of a CT-CT cell with 0.8 M KOH and 0.46 M HO$^-_2$ has been found to have a smaller slope than that of an analogous Ni-CT cell, so that the former is better than the later at voltages under 0.6 V. Thus, while in a CT-CT cell a voltage of 0.48 V for j = 38 mA cm$^{-2}$ is only needed, in the CT-CT cell 0.55 V is required to obtain the same current-density with a Ni anode. Nevertheless, it is necessary to apply 1.55 V for a current of 100 mA cm$^{-2}$ to circulate through the CT-CT cell, i.e. about 0.50 V more than for a Ni-CT cell.

Moreover, volumes of oxygen evolved from the solution are small: 3 ml at 38 mA cm$^{-2}$ and 7.5 ml at 100 mA cm$^{-2}$, where the respective volumes for n = 2 should be 13.7 ml and 36.6 ml, respectively. This fact indicates that most of the oxygen generated in the CT anode diffuses through it instead of being evolved through the solution, which would permit its extraction by means of an aspirator, with a minimum degree of moisture.

**Claims**

1. A process in which an electrolytic cell is used for the electrolytic separation of oxygen from its mixtures comprising the steps of:

   a) bringing an oxygen-containing gas in contact with a gas-diffusion cathode which contains no catalyst for decomposition of hydrogen peroxide,
   b) supplying a potential-difference between the gas-diffusion cathode and an anode, in such a manner that the following steps take place:

   b.1- reduction of oxygen into hydrogen peroxide or its conjugated base at the cathode according to a bielectronic process, by the contact of the oxygen-containing gas with said gas-diffusion cathode which contains no catalyst;
   b.2- diffusion of hydrogen peroxide or its conjugated base across the cell from said gas-diffusion cathode to said anode, by means of an aqueous electrolyte contained therein, and
   b.3.- oxidation of diffused hydrogen peroxide or its conjugated base which reaches the anode into pure oxygen said oxidation being a bielectronic process.

2. A process as claimed in claim 1 **characterized in that** the potential-difference between anode and cathode is sufficiently low as not to cause reduction of water, and preferably ranges from 0.1 V to 1 V.

3. A process as claimed in claim 1 or 2 **characterized in that** the process is preferably performed at temperatures ranging from 20 to 50 °C.

4. A process as claimed in any of claims 1 to 3 **characterized in that** the pressure of the oxygen-containing gas mixture ranges from $1 \times 10^5$ Pa to $1 \times 10^7$ Pa, preferably from $1 \times 10^5$ to $1 \times 10^6$ Pa.

5. A process as claimed in any of claims 1 to 4 **characterized in that** the pure oxygen produced is collected or sucked at a pressure ranging from ambient pressure to $1 \times 10^3$ Pa, preferably from $1 \times 10^5$ to $1 \times 10^4$ Pa.

6. A process as claimed in claim 5 **characterized in that** the pure oxygen produced is collected or sucked through the anode.

7. A process as claimed in any of the preceding claims **characterized in that** the electrolyte contains a Li-, Na- or K- hydroxide.

8. A process as claimed in claim 7 **characterized in that** the electrolyte has a concentration of Li-, Na- or K-hydroxide ranging from 0.1 M to 10 M, preferably from 0.5 M to 6 M.

9. A process as claimed in claim 7 or 8 **characterized in that** an initial amount of hydrogen peroxide is added to the electrolyte so that its concentration remains stationary during the process.

10. A process as claimed in any of claims 7 to 9 **characterized in that** a small amount of a metal-sequestering agent is added to the electrolyte.

11. A process as claimed in claim 10 **characterized in that** the metal-sequestering agent is urea.

12. An equipment for producing pure oxygen from a gas mixture containing it which consists of an electrolytic cell wherein there are arranged at least a cathode and an anode, **characterized in that** said cell is a single-compartment cell (1) without a separation membrane wherein there is an inlet (12) through the cathodes (8) for an oxygen-containing gas mixture and an outlet (5) for the oxygen produced in the cell, said cathode containing a hydrophobic polymer but no decomposition catalyst for hydrogen peroxide, and the anode (9) being stable to the components present in the electrolyte.

13. An equipment as claimed in claim 12 **characterized in that** the electrolytic cell comprises an external thermostatization jacket (2).

14. An equipment as claimed in claim 12 or 13 **characterized in that** it comprises a device for stirring or recycling the electrolyte.

**15.** An equipment as claimed in any of claims 12 to 14 **characterized in that** the cathodes are up to 5 mm in thickness, preferably from 0.1 to 0.5 mm.

**16.** An equipment as claimed in claim 12 or 15 **characterized in that** the distance between cathode and anode ranges from 0.1 to 10 mm, preferably from 0.1 to 1 mm.

**17.** An equipment as claimed in claim 12, 13, 14 or 16 **characterized in that** the inert anode is an anode made of any conducting material, stable under the process conditions and capable of oxidizing hydrogen peroxide to oxygen, said material including preferably metals, alloys, conducting metal-oxides, graphite or carbon-PTFE.

**18.** An equipment as claimed in claim 16 or 17 **characterized in that** the anode made of said materials is a porous anode.

**19.** An equipment as claimed in claim 16 or 18 **characterized in that** the porous anode is a grid, mesh, or metallic gauze, or a sintered conducting material.

**20.** An equipment as claimed in claim 16, 17 or 18 **characterized in that** the porous anode is horizontally arranged over, and close to, the cathode.

**21.** An equipment as claimed in any of claims 12 to 20 **characterized in that** the anode and cathode are arranged so that the electrolyte flows through the anode in an opposite direction to the cathode and draws along with it the oxygen being produced.

**22.** An equipment as claimed in any of the preceding claims **characterized in that** between anode and cathode said equipment comprises a thin permeable membrane or diaphragm, preferably made of paper, cloth, asbestos, glass or of a plastic lattice.

**Patentansprüche**

**1.** Verfahren unter Verwendung einer elektrolytischen Zelle zur elektrolytischen Abtrennung von Sauerstoff aus dessen Gemischen mit den Schritten:

a) Inkontaktbringen eines Sauerstoff-enthaltenden Gases mit einer Gas-Diffusions-Kathode, die keinen Katalysator zur Zersetzung von Wasserstoffperoxid enthält,

b) Bereitstellen einer Potentialdifferenz zwischen der Gas-Diffusions-Kathode und einer Anode, so daß die folgenden Schritte stattfinden:

b.1 - Reduktion von Sauerstoff zu Wasserstoffperoxid oder dessen konjugierter Base an der Kathode nach einem Zweielektronenprozeß, durch den Kontakt des Sauerstoff-enthaltenden Gases mit der Gas-Diffusions-Kathode, die keinen Katalysator enthält;

b.2 - Diffusion von Wasserstoffperoxid oder dessen konjugierter Base durch die Zelle von der Gas-Diffusions-Kathode zu der Anode, mittels eines darin enthaltenen wässrigen Elektrolyten, und

b.3 - Oxidation von diffundiertem Wasserstoffperoxid oder dessen konjugierter Base, der die Anode erreicht, zu reinem Sauerstoff, wobei die Oxidation ein Zweielektronenprozeß ist.

**2.** Verfahren nach Anspruch 1,
**dadurch gekennzeichnet, daß**
die Potentialdifferenz zwischen Anode und Kathode ausreichend niedrig ist, um keine Reduktion von Wasser zu bewirken und vorzugsweise von 0,1 V bis 1 V reicht.

**3.** Verfahren nach Anspruch 1 oder 2,
**dadurch gekennzeichnet, daß**

das Verfahren vorzugsweise bei Temperaturen im Bereich von 20 bis 50°C durchgeführt wird.

**4.** Verfahren nach einem der Ansprüche 1 - 3,
**dadurch gekennzeichnet, daß**
der Druck des Sauerstoff-enthaltenden Gasgemischs im Bereich von $1 \times 10^5$ Pa bis $1 \times 10^7$ Pa, vorzugsweise $1 \times 10^5$ Pa bis $1 \times 10^6$ Pa liegt.

**5.** Verfahren nach einem der Ansprüche 1 - 4,
**dadurch gekennzeichnet, daß**
der erzeugte reine Sauerstoff bei einem Druck im Bereich von Umgebungsdruck bis $1 \times 10^3$ Pa, vorzugsweise $1 \times 10^5$ Pa bis $1 \times 10^4$ Pa, gesammelt oder abgesaugt wird.

**6.** Verfahren nach Anspruch 5,
**dadurch gekennzeichnet, daß**
der erzeugte reine Sauerstoff durch die Anode gesammelt oder abgesaugt wird.

**7.** Verfahren nach einem der vorhergehenden Ansprüche,
**dadurch gekennzeichnet, daß**
der Elektrolyt ein Li-, Na- oder K-Hydroxid enthält.

**8.** Verfahren nach Anspruch 7,
**dadurch gekennzeichnet, daß**
der Elektrolyt eine Li-, Na- oder K-Hydroxidkonzentration im Bereich von 0,1 M bis 10 M, vorzugsweise von 0,5 M bis 6 M, aufweist.

**9.** Verfahren nach Anspruch 7 oder 8,
**dadurch gekennzeichnet, daß**
eine Anfangsmenge von Wasserstoffperoxid zu dem Elektrolyt gegeben wird, so daß dessen Konzentration während des Verfahrens stationär bleibt.

**10.** Verfahren nach einem der Ansprüche 7 - 9,
**dadurch gekennzeichnet, daß**
eine geringe Menge eines Metall-maskierenden Mittels zum Elektrolyten gegeben wird.

**11.** Verfahren nach Anspruch 10,
**dadurch gekennzeichnet, daß**
das Metall-maskierende Mittel Harnstoff ist.

**12.** Vorrichtung zur Erzeugung von reinem Sauerstoff aus einem Gasgemisch, das diesen enthält, bestehend aus einer elektrolytischen Zelle, worin zumindestens eine Kathode und eine Anode angeordnet sind,
**dadurch gekennzeichnet, daß**
die Zelle eine Ein-Kompartiment-Zelle (1) ohne eine Trennmembran ist, worin sich ein Einlaß (12) durch die Kathode (8) für ein Sauerstoff-enthaltendes Gasgemisch befindet, sowie ein Auslaß (5) für den in der Zelle erzeugten Sauerstoff, wobei die Kathode ein hydrophobes Polymer enthält, jedoch keinen Zersetzungskatalysator für Wasserstoffperoxid, und die Anode (9) stabil gegenüber den im Elektrolyten befindlichen Bestandteilen ist.

**13.** Vorrichtung nach Anspruch 12,
**dadurch gekennzeichnet, daß**
die elektrolytische Zelle einen externen Thermostatisierungsmantel (2) aufweist.

**14.** Vorrichtung nach Anspruch 12 oder 13,
**dadurch gekennzeichnet, daß**
sie eine Einrichtung zum Rühren oder Recyceln des Elektrolyten aufweist.

**15.** Vorrichtung nach einem der Ansprüche 12 - 14,
**dadurch gekennzeichnet, daß**
die Kathoden eine Dicke von bis zu 5 mm aufweisen, vorzugsweise von 0,1 bis 0,5 mm.

**16.** Vorrichtung nach Anspruch 12 oder 15,
**dadurch gekennzeichnet, daß**
der Abstand zwischen der Kathode und Anode im Bereich von 0,1 bis 10 mm, vorzugsweise von 0,1 bis 1 mm, liegt.

**17.** Vorrichtung nach Anspruch 12, 13, 14 oder 16,
**dadurch gekennzeichnet, daß**
die inerte Anode eine aus einem leitfähigen Material hergestellte Anode ist, das unter den Verfahrensbedingungen stabil ist und zur Oxidation von Wasserstoffperoxid zu Sauerstoff fähig ist, wobei das Material vorzugsweise Metalle, Legierungen, leitfähige Metalloxide, Graphit oder Kohlenstoff-PTFE, enthält.

**18.** Vorrichtung nach Anspruch 16 oder 17,
**dadurch gekennzeichnet, daß**
die aus den Materialien hergestellte Anode eine poröse Anode ist.

**19.** Verfahren nach Anspruch 16 oder 18,
**dadurch gekennzeichnet, daß**
die poröse Anode ein Netz, eine Maschenanordnung, ein metallisches Sieb oder ein gesintertes leitfähiges Material ist.

**20.** Vorrichtung nach Anspruch 16, 17 oder 18,
**dadurch gekennzeichnet, daß**
die poröse Anode horizontal über und nahe an der Kathode angeordnet ist.

**21.** Vorrichtung nach einem der Ansprüche 12 - 20,
**dadurch gekennzeichnet, daß**
die Anode und Kathode so angeordnet sind, daß der Elektrolyt durch die Anode in einer zur Kathode entgegengesetzten Richtung fließt und den erzeugten Sauerstoff mit sich zieht.

**22.** Vorrichtung nach einem der vorhergehenden Ansprüche,
**dadurch gekennzeichnet, daß**
die Vorrichtung zwischen Anode und Kathode eine dünne permeable Membran oder ein Diaphragma aufweist, vorzugsweise aus Papier, Gewebe, Asbest, Glas oder einem Kunststoffgitter.

**Revendications**

**1.** Processus, dans lequel est utilisée une cellule électrolytique, pour la séparation électrolytique de l'oxygène de ses mélanges, comprenant les étapes consistant à :

a) amener un gaz contenant de l'oxygène en contact avec une cathode de diffusion de gaz ne contenant pas de catalyseur pour la décomposition du peroxyde d'hydrogène,
b) fournir une différence de potentiel entre la cathode de diffusion de gaz et une anode, d'une manière telle que les étapes suivantes aient lieu :

b.1- réduction d'oxygène en peroxyde d'hydrogène ou sa base conjuguée au niveau de la cathode selon un processus biélectronique, par le contact du gaz contenant l'oxygène avec ladite cathode de diffusion de gaz ne contenant pas de catalyseur ;
b.2- diffusion de peroxyde d'hydrogène ou de sa base conjuguée au travers de la cellule à partir de ladite cathode de diffusion de gaz vers ladite anode au moyen d'un électrolyte aqueux contenu dans celle-ci, et
b.3- oxydation du peroxyde d'hydrogène diffusé ou de sa base conjuguée qui atteint l'anode en oxygène pur, ladite oxydation étant un processus biélectronique.

**2.** Processus selon la revendication 1, **caractérisé en ce que** la différence de potentiel entre l'anode et la cathode est suffisamment faible pour ne pas provoquer de réduction de l'eau et s'étend de préférence de 0,1 V à 1 V.

**3.** Processus selon la revendication 1 ou 2, **caractérisé en ce que** le processus est exécuté de préférence à des températures s'étendant de 20 à 50°C.

**4.** Processus selon l'une quelconque des revendications 1 à 3, **caractérisé en ce que** la pression du mélange de gaz contenant l'oxygène s'étend de $1\times10^5$ Pa à $1\times10^7$ Pa, de préférence de $1\times10^5$ Pa à $1\times10^6$ Pa.

**5.** Processus selon l'une quelconque des revendications 1 à 4, **caractérisé en ce que** l'oxygène pur produit est recueilli ou aspiré à une pression s'étendant de la pression ambiante jusqu'à $1\times10^3$ Pa, de préférence de $1\times10^5$ Pa à $1\times10^4$ Pa.

**6.** Processus selon la revendication 5, **caractérisé en ce que** l'hydrogène pur produit est recueilli ou aspiré à travers l'anode.

**7.** Processus selon l'une quelconque des revendications précédentes, **caractérisé en ce que** l'électrolyte contient un hydroxyde de Li, Na ou K.

**8.** Processus selon la revendication 7, **caractérisé en ce que** l'électrolyte a une concentration en hydroxyde de Li, Na ou K, s'étendant de 0,1 M à 10 M, de préférence de 0,5 M à 6 M.

**9.** Processus selon la revendication 7 ou 8, **caractérisé en ce qu'**une quantité initiale de peroxyde d'hydrogène est ajoutée à l'électrolyte de façon que sa concentration reste fixe pendant le processus.

**10.** Processus selon l'une quelconque des revendications 7 à 9, **caractérisé en ce qu'**une petite quantité d'agent séquestrant de métal est ajoutée à l'électrolyte.

**11.** Processus selon la revendication 10, **caractérisé en ce que** l'agent séquestrant de métal est de l'urée.

**12.** Installation de production d'oxygène pur à partir d'un mélange de gaz le contenant, constituée d'une cellule électrolytique dans laquelle sont agencées au moins une cathode et une anode, **caractérisé en ce que** ladite cellule est une cellule à compartiment unique (1) sans membrane de séparation, dans laquelle se trouve une entrée (12) à travers la cathode (8) pour un mélange de gaz contenant de l'oxygène et une sortie (5) pour l'oxygène produit dans la cellule, ladite cathode contenant un polymère hydrophobe mais pas de catalyseur de décomposition pour le peroxyde d'hydrogène et l'anode (9) étant stable vis-à-vis des composants présents dans l'électrolyte.

**13.** Installation selon la revendication 12, **caractérisée en ce que** la cellule électrolytique comprend une enveloppe externe thermostatique (2).

**14.** Installation selon la revendication 12 ou 13, **caractérisée en ce qu'**elle comprend un dispositif pour agiter ou recycler l'électrolyte.

**15.** Installation selon l'une quelconque des revendications 12 à 14, **caractérisée en ce que** les cathodes ont une épaisseur allant jusqu'à 5 mm, de préférence de 0,1 à 0,5 mm.

**16.** Installation selon la revendication 12 ou 15, **caractérisée en ce que** la distance entre la cathode et l'anode s'étend de 0,1 à 10 mm, de préférence de 0,1 à 1 mm.

**17.** Installation selon la revendication 12, 13, 14 ou 16, **caractérisée en ce que** l'anode inerte est une anode faite d'un matériau conducteur quelconque, stable dans les conditions du processus et capable d'oxyder le peroxyde d'hydrogène en oxygène, ledit matériau comportant de préférence des métaux, alliages, métal-oxydes conducteurs, graphite ou carbone-PTFE.

**18.** Installation selon la revendication 16 ou 17, **caractérisée en ce que** l'anode faite desdits matériaux est une anode poreuse.

**19.** Installation selon la revendication 16 ou 18, **caractérisée en ce que** l'anode poreuse est une grille, un filet ou un tamis métallique ou un matériau conducteur fritté.

**20.** Installation selon la revendication 16, 17 ou 18, **caractérisée en ce que** l'anode poreuse est agencée horizontalement au-dessus et près de la cathode.

**21.** Installation selon l'une quelconque des revendications 12 à 20, **caractérisée en ce que** l'anode et la cathode sont agencées de façon que l'électrolyte s'écoule vers l'anode en sens inverse par rapport à la cathode et entraîne avec celui-ci l'oxygène produit.

22. Installation selon l'une quelconque des revendications précédentes, **caractérisée en ce que**, entre la cathode et l'anode, ladite installation comprend une membrane mince perméable ou diaphragme, fabriquée de préférence à partir de papier, de tissu, d'amiante, de verre ou d'un réseau en matière plastique.

FIG. 1

# FIG. 2